# FASCICULE DE BREVET EUROPEEN

(11) **EP 1 436 182 B1**
(45) Date de publication et mention de la délivrance du brevet: **31.08.2005**
(21) Numéro de dépôt: 02785523.8
(22) Date de dépôt: 07.10.2002
(51) Int. Cl.: B60T 11/228

(54) **MAITRE-CYLINDRE PERFECTIONNE POUR SYSTEME DE FREINAGE**
VERBESSERTER HAUPTZYLINDER FÜR EINE BREMSANLAGE
IMPROVED MASTER CYLINDER FOR BRAKING SYSTEM

(30) Priorité: 10.10.2001 FR 0113073
(43) Date de publication de la demande: 14.07.2004
(73) Titulaire: ROBERT BOSCH GMBH, 70442 Stuttgart (DE)
(72) Inventeur: DELAGE, Jean-Pierre, F-94160 Saint Mande (FR); NEN, Yannick, F-94210 La Varenne St Hilaire (FR); MANFREDINI, Stéphane, F-78400 Chatou (FR)
(74) Mandataire: Hurwic, Aleksander Wiktor
(86) Numéro de dépôt international: PCT/FR2002/003406
(87) Numéro de publication internationale: WO 2003/031245

(56) Documents cités:
- US-A- 5 449 225
- US-A- 6 065 292
- PATENT ABSTRACTS OF JAPAN vol. 1998, no. 13, 30 novembre 1998 (1998-11-30) -& JP 10 226329 A (NABCO LTD), 25 août 1998 (1998-08-25)

## Description

La présente invention concerne un maître cylindre perfectionné pour système de freinage.

On connaît déjà dans l'état de la technique, par exemple dans le document JP 10 226 329, un maître cylindre pour système de freinage, du type comprenant :
- un corps délimitant une chambre d'alimentation de liquide de frein et au moins une chambre de mise sous pression du liquide de frein, dite chambre primaire,
- un piston séparant les chambres d'alimentation et primaire, dit piston primaire, déplaçable axialement entre des positions de repos et de mise sous pression de la chambre primaire,
- un canal d'alimentation de liquide de frein, ménagé dans le corps, et
- des moyens de raccordement de ce canal d'alimentation avec la chambre d'alimentation, agencés dans le corps.

Ce type de maître cylindre peut constituer un maître cylindre tandem à clapets permettant d'alimenter deux circuits de liquide de frein indépendants. Un maître cylindre tandem comprend généralement deux chambres primaire et secondaire ainsi que deux pistons primaire et secondaire, ces pistons portants des clapets primaire et secondaire.

Habituellement, les moyens de raccordement établissent une communication permanente entre le canal d'alimentation et la chambre d'alimentation qui est raccordée à un réservoir de liquide de frein. Le volume de la chambre d'alimentation étant variable en fonction des déplacements du piston primaire, le canal d'alimentation permet l'apport de liquide de frein dans la chambre d'alimentation ou le refoulement de liquide de frein vers le réservoir, selon que le volume de la chambre d'alimentation augmente ou diminue.

Les déplacements du piston primaire sont commandés par le conducteur en actionnant une pédale de frein. Le volume de la chambre d'alimentation augmente lorsque le conducteur actionne la pédale de frein et diminue lorsque le conducteur relâche la pédale de frein.

De façon classique, la position de repos du piston primaire est définie par la coopération d'une butée de repos, solidaire du corps du maître cylindre, avec une face d'appui ménagée sur le piston primaire. Par ailleurs, un organe d'appui est monté avec un jeu axial dans un logement transversal ménagé dans le piston primaire. L'organe d'appui coopère avec le clapet pour l'ouvrir lorsque le piston primaire est en position de repos.

Or, lorsque le conducteur relâche la pédale de frein, le retour de la face d'appui du piston primaire et, dans une moindre mesure, de l'organe d'appui contre la butée de repos, est susceptible d'engendrer un bruit indésirable.

L'invention a pour but de supprimer ou de limiter autant que possible le bruit causé par le retour de l'organe d'appui contre la butée de repos lorsque le conducteur relâche la pédale de frein.

A cet effet, l'invention a pour objet un maître cylindre pour système de freinage, du type précité, **caractérisé en ce que** les moyens de raccordement comprennent deux ouvertures, décalées axialement, dites arrière et avant en considérant le sens de déplacement du piston primaire lors d'une opération de freinage, l'ouverture avant étant obturable, au moins partiellement, par déplacement du piston primaire de façon que la section de passage de liquide de frein à travers cette ouverture avant soit minimale, lorsque le piston primaire est dans sa position de repos.

Suivant d'autres caractéristiques de ce maître cylindre :
- les moyens de raccordement comprennent des moyens de raccordement arrière communiquant avec l'ouverture arrière et des moyens de raccordement avant communiquant avec l'ouverture avant, la section minimale de passage de liquide de frein des moyens de raccordement arrière étant inférieure à la section minimale de passage de liquide de frein des moyens de raccordement avant ;
- les moyens de raccordement arrière comprennent un perçage, raccordant le canal d'alimentation avec l'ouverture arrière, dans lequel est logé un organe percé formant étranglement ;
- l'organe percé est vissé ou emmanché à force dans le perçage de raccordement arrière ;
- les moyens de raccordement avant comprennent un perçage, de préférence sensiblement transversal au canal d'alimentation raccordant ce canal d'alimentation avec l'ouverture avant ;
- le piston primaire est muni d'un canal de mise en communication des chambres obturable par un clapet;
- la position de repos du piston primaire est définie par la coopération d'une butée de repos, solidaire du corps, avec une face d'appui ménagée sur le piston primaire ;
- la butée de repos est délimitée par une rondelle entourant le piston primaire ;
- le maître cylindre comprend un organe d'appui monté avec un jeu axial dans un logement transversal ménagé dans le piston primaire, le clapet étant déplaçable entre des positions ouverte et fermée en fonction de la position relative du piston primaire par rapport à l'organe d'appui ;
- l'organe d'appui a une forme générale de goupille ;
- le clapet est muni d'une queue de commande, s'étendant à travers le canal du piston primaire, destiné à coopérer avec l'organe d'appui de façon à maintenir le clapet en position ouverte ;
- le maître-cylindre est du type tandem à clapets.

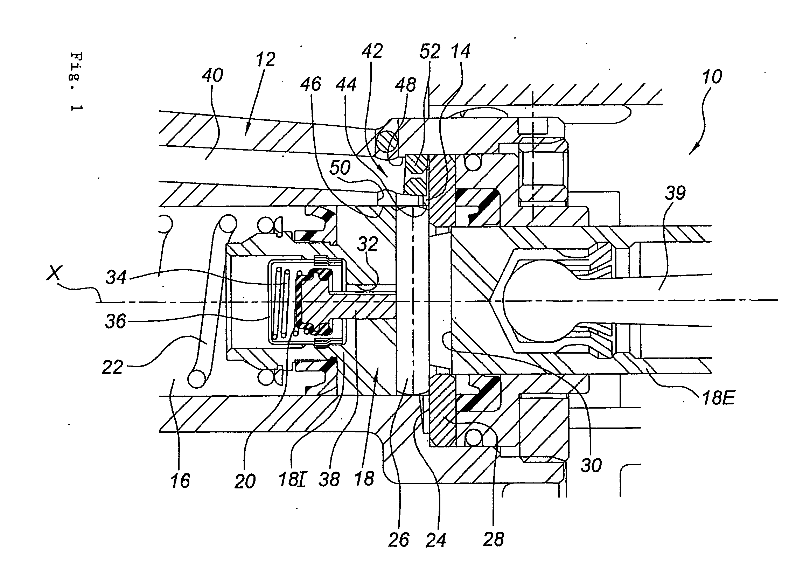

L'invention sera mieux comprise à la lecture de la description qui va suivre, donnée uniquement à titre d'exemple et faite en se référant aux dessins dans lesquels les figures 1 à 3 sont des vues partielles, en coupe axiale, d'un maître cylindre pour système de freinage, selon l'invention, dans différentes configurations de fonctionnement.

On a représenté sur les figures un maître-cylindre pour système de freinage, selon l'invention, désigné par la référence générale 10. Dans l'exemple décrit, le maître-cylindre 10 est du type tandem à clapets.

Le maître-cylindre 10 comprend un corps 12 délimitant une chambre 14 d'alimentation de liquide de frein, de volume variable.

Le corps 12 délimite également deux chambres de mise sous pression du liquide de frein, appelées habituellement chambres primaire et secondaire. Sur les figures, on a représenté uniquement la chambre primaire 16.

Le maître-cylindre 10 comprend également deux pistons primaire et secondaire. Sur les figures on a représenté uniquement le piston primaire 18 séparant les chambres d'alimentation 14 et primaire 16.

Les deux pistons portent des clapets primaire et secondaire. Sur les figures, on a représenté uniquement le clapet primaire 20 porté par le piston 18.

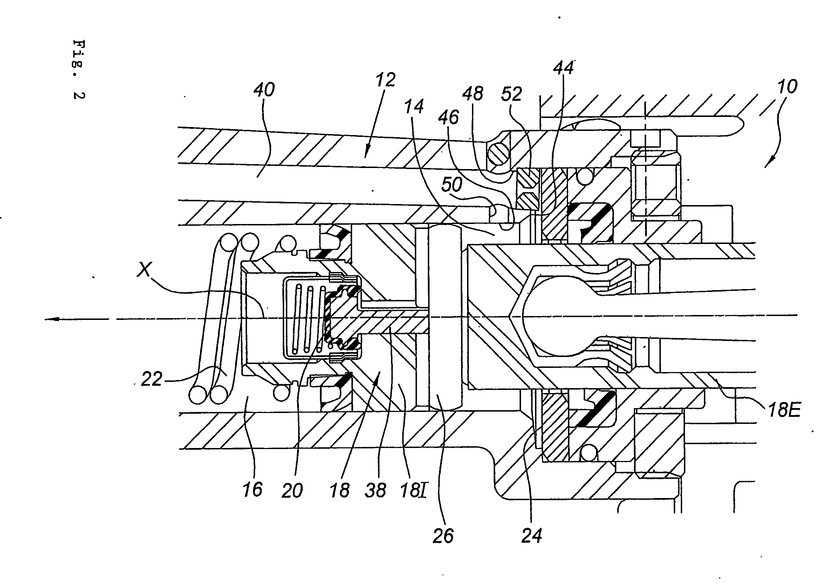

Le piston primaire 18 est déplaçable axialement, parallèlement à l'axe X illustré sur les figures, entre une position de repos, telle que représentée sur la figure 1, et une position de mise sous pression de la chambre primaire 16, telle que représentée par exemple sur la figure 2.

Le piston primaire 18 est rappelé élastiquement vers sa position de repos par un ressort hélicoïdal 22 logé dans la chambre primaire 16. Cette position de repos est définie par la coopération d'une butée de repos 24, solidaire du corps 12, avec une face d'appui ménagée sur le piston primaire 18. Cette butée de repos 24 est délimitée, par exemple, par une face d'une rondelle 28 entourant le piston primaire 18. La rondelle 28 est fixée de façon connue en soi dans le corps 12.

Un organe d'appui 26, de préférence en forme générale de goupille, est monté, avec un jeu axial, dans un logement transversal. 30 ménagé dans le piston primaire 18.

On notera que le logement 30 est ménagé entre deux extrémités 181, 18E respectivement interne et externe au corps 12.

L'extrémité interne 18I du piston primaire est munie d'un canal axial 32 de mise en communication des chambres d'alimentation 14 et primaire 16. Ce canal de communication 32 est obturable par le clapet primaire 20. De façon classique, le clapet 20 est déplaçable entre une position ouverte, telle que représentée sur la figure 1, et une position fermée, telle que représentée sur les figures 2 et 3, vers laquelle il est rappelé élastiquement par un ressort 34 prenant appui sur un siège passant 36, solidaire du piston 18, et le clapet 20.

Conformément à un fonctionnement classique du clapet primaire 20, les positions ouverte et fermée de ce clapet 20 dépendent de la position axiale relative du piston primaire 18 par rapport à l'organe d'appui 26. En effet, le clapet 20 est muni d'une queue de commande 38, s'étendant à travers le canal 32, destinée à coopérer avec l'organe d'appui 26 pour maintenir le clapet primaire 20 en position ouverte, notamment lorsque le piston primaire 18 est en position de repos, comme cela est représenté sur la figure 1.

On notera que, de façon connue en soi, le canal 32 communique en permanence avec la chambre d'alimentation 14 grâce à des différences de sections adaptées de l'organe d'appui 26 et du logement 30.

L'extrémité externe 18E du piston primaire comporte des moyens classiques de liaison avec une tige de poussée 39.

La chambre d'alimentation 14 est raccordée, par l'intermédiaire d'un canal d'alimentation 40 ménagé dans le corps 12, à un réservoir de liquide de frein classique, non représenté sur les figures.

Le canal d'alimentation 40, dont on a représenté un tronçon rectiligne sur les figures, est susceptible de communiquer avec la chambre d'alimentation 14 à l'aide de moyens de raccordement 42.

Dans ce qui suit, les orientations arrière et avant seront considérées par rapport au sens de déplacement du piston primaire 18 lors d'une opération de freinage.

Les moyens de raccordement 42 comprennent une ouverture arrière 44, par exemple de forme générale annulaire, et une ouverture avant 46 décalée axialement par rapport à l'ouverture arrière 44. L'ouverture avant 46 est obturable, au moins partiellement, par déplacement du piston primaire 18 de façon que, lorsque ce piston primaire 18 est dans sa position de repos (voir figure 1), la section de passage de liquide de frein à travers cette ouverture avant 46 est minimale, voire nulle.

Les moyens de raccordement 42 comprennent, en outre, des moyens de raccordement 48, dits arrière, communiquant avec l'ouverture arrière 44, et des moyens de raccordement 50, dits avant, communiquant avec l'ouverture avant 46.

Les moyens de raccordement arrière sont constitués, par exemple, par un perçage 48 formant un prolongement du tronçon rectiligne du canal d'alimentation 40. Ce perçage 48 raccorde donc le canal d'alimentation 40 avec l'ouverture arrière 44. Un organe percé 52, formant étranglement, est logé dans le perçage 48 de raccordement arrière. L'organe percé 52 est, par exemple, emmanché à force ou vissé dans le perçage 48 de raccordement arrière.

Les moyens de raccordement avant sont constitués, par exemple, par un perçage 50, de préférence sensiblement transversal au canal d'alimentation 40, raccordant ce canal d'alimentation 40 avec l'ouverture avant 46.

On notera que, du fait de la présence de l'organe 52 formant étranglement dans les moyens de raccordement arrière 48, la section minimale de passage de liquide de frein de ces moyens de raccordement arrière 48 est nettement inférieure à la section minimale de passage de liquide de frein des moyens de raccordement avant constitués par le perçage 50.

On précisera ci-dessous les principaux aspects du fonctionnement du maître cylindre 10 liés à l'invention.

On considère initialement le piston primaire 18 au repos, comme cela est représenté sur la figure 1. La chambre d'alimentation 14 communique avec le canal d'alimentation 40 par l'intermédiaire, essentiellement, de l'ouverture arrière 44 et de l'étranglement délimité par l'organe 52. L'ouverture avant 46 est obturée, partiellement ou totalement, par l'extrémité interne 18I du piston primaire. Le clapet primaire 20 est ouvert.

On notera que, dans le cas où l'obturation de l'ouverture avant 46 n'est pas totale lorsque le piston primaire 18 est en position de repos, le passage de liquide de frein à travers cette ouverture avant 46 est néanmoins très réduite.

Lors d'une opération de freinage, le piston primaire 18 se déplace vers l'avant de façon à atteindre, par exemple, la position représentée sur la figure 2 dans laquelle le clapet 20 est fermé. Le piston primaire 18 s'écartant de sa position de repos, le volume de la chambre d'alimentation 14 augmente, ce qui a pour effet d'aspirer du liquide de frein. L'apport de liquide de frein dans la chambre 14 se fait, tout d'abord, essentiellement à travers l'ouverture arrière 44 et l'organe 52 délimitant l'étranglement, puis, lorsque l'ouverture avant 46 est dégagée, essentiellement à travers cette ouverture 46.

On notera que l'ouverture avant 46 permet d'approvisionner la chambre d'alimentation 14 en liquide de frein avec un débit plus important que celui que l'ouverture arrière 44 est capable de fournir, cette ouverture arrière 44 étant en effet raccordée à l'étranglement délimité par l'organe 52.

Si, lorsque le piston primaire 18 est en position de repos, l'ouverture avant 46 est totalement obturée, l'homme du métier déterminera la distance minimale entre la position de repos du piston primaire 18 et la position de ce piston 18 permettant la mise en communication de la chambre d'alimentation 14 avec le canal d'alimentation 40, par l'orifice avant 46, de façon à éviter tout risque d'aspiration accidentel d'air résultant, lors du freinage, d'un débit insuffisant d'approvisionnement de liquide dans la chambre d'alimentation 14.

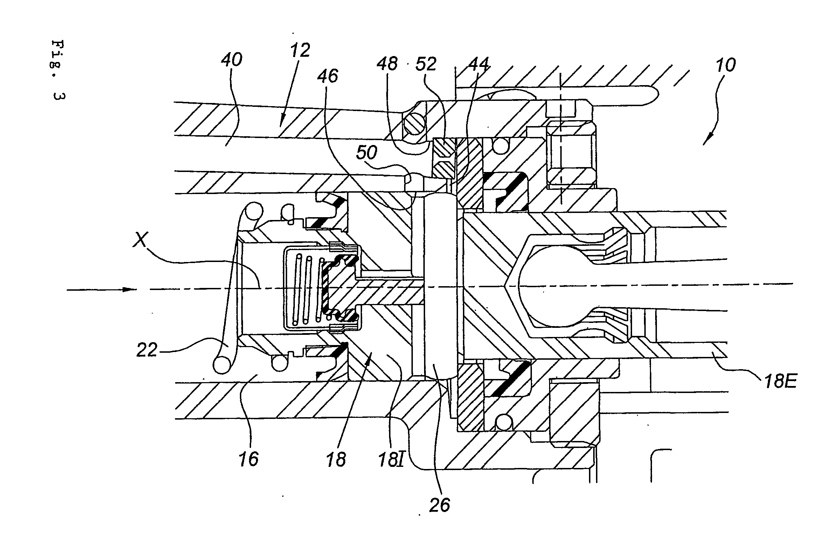

Lors du dé-freinage, le piston primaire 18 est rappelé vers sa position de repos par le ressort 22, en passant notamment par la position illustrée sur la figure 3. Ceci a pour effet de réduire le volume de la chambre d'alimentation 14.

Le piston primaire 18 débute alors une course de retour vers sa position de repos, au cours de laquelle le liquide de frein est tout d'abord refoulé dans le canal d'alimentation 40, vers le réservoir, avec un débit relativement important, ceci tant que l'ouverture avant 46 est largement dégagée. Puis, après obturation maximale de l'orifice 46, le refoulement du liquide de frein dans le canal d'alimentation 40 est freiné par l'étranglement délimité par l'organe 52, ce qui évite ainsi un retour brutal du piston primaire 18 et de l'organe d'appui 26 contre la butée de repos 24.

De ce fait, en ralentissant le retour du piston primaire 18 vers sa position de repos, l'étranglement délimité par l'organe 52 permet d'éviter tout bruit indésirable causé, essentiellement, par le retour de la face d'appui ménagée sur le piston primaire 18 contre la butée de repos 24 et, dans une moindre mesure, par le retour de l'organe d'appui 26 contre cette butée de repos 24.

On notera par ailleurs que l'étranglement délimité par l'organe 52 n'affecte pas le fonctionnement normal du maître-cylindre lors d'une action de freinage.

Parmi les avantages de l'invention, on notera que les deux ouvertures arrière 44 et avant 46 permettent de bénéficier d'une section totale de passage de liquide de frein qui varie en fonction de la position du piston de façon à être suffisamment grande lors de la course d'arrière en avant du piston 18 (freinage du véhicule) et suffisamment réduite en fin de course de retour d'avant en arrière de ce piston 18 afin de produire l'effet de freinage souhaité.

Le maître-cylindre selon la présente invention s'applique en particulier au système de freinage électrohydraulique.

## Revendications

1. Maître cylindre pour système de freinage, du type comprenant :
- un corps (12) délimitant une chambre (14) d'alimentation de liquide de frein et au moins une chambre (16) de mise sous pression du liquide de frein, dite chambre primaire,
- un piston (18) séparant les chambres d'alimentation (14) et primaire (16), dit piston primaire, déplaçable axialement entre des positions de repos et de mise sous pression de la chambre primaire (16),
- un canal (40) d'alimentation de liquide de frein, ménagé dans le corps (12), et
- des moyens (42) de raccordement de ce canal d'alimentation (40) avec la chambre d'alimentation (14), agencés dans le corps (12),
**caractérisé en ce que** les moyens de raccordement (42) comprennent deux ouvertures, décalées axialement, dites arrière (44) et avant (46) en considérant le sens de déplacement du piston primaire (18) lors d'une opération de freinage, l'ouverture avant étant obturable, au moins partiellement, par déplacement du piston primaire (18) de façon que, lorsque le piston primaire (18) est dans sa position de repos, la section de passage de liquide de frein à travers cette ouverture avant (46) est minimale.

2. Maître cylindre selon la revendication 1, **caractérisé en ce que** les moyens de raccordement (42) comprennent des moyens de raccordement arrière (48) communiquant avec l'ouverture arrière (44) et des moyens de raccordement avant (50) communiquant avec l'ouverture avant (46), la section minimale de passage de liquide de frein des moyens de raccordement arrière (48) étant inférieure à la section minimale de passage de liquide de frein des moyens de raccordement avant (50).

3. Maître cylindre selon la revendication 2, **caractérisé en ce que** les moyens de raccordement arrière comprennent un perçage (48), raccordant le canal d'alimentation (40) avec l'ouverture arrière (44), dans lequel est logé un organe percé (52) formant étranglement.

4. Maître-cylindre selon la revendication 3, **caractérisé en ce que** l'organe percé (52) est vissé ou emmanché à force dans le perçage de raccordement arrière (48).

5. Maître-cylindre selon l'une quelconque des revendications 2 à 4, **caractérisé en ce que** les moyens de raccordement avant comprennent un perçage (50), de préférence sensiblement transversal au canal d'alimentation (40) raccordant ce canal d'alimentation (40) avec l'ouverture avant (46).

6. Maître cylindre selon l'une quelconque des revendications 1 à 5, **caractérisé en ce que** le piston primaire (18) est muni d'un canal (32) de mise en communication des chambres (14, 16) obturable par un clapet (20).

7. Maître cylindre selon la revendication 6, **caractérisé en ce que** la position de repos du piston primaire (18) est définie par la coopération d'une butée de repos (24), solidaire du corps (12), avec une face d'appui ménagée sur le piston primaire (18).

8. Maître cylindre selon la revendication 7, **caractérisé en ce que** la butée de repos (24) est délimitée par une rondelle (28) entourant le piston primaire (18).

9. Maître cylindre selon l'une quelconque des revendications 6 à 8, **caractérisé en ce qu'**il comprend un organe d'appui (26) monté avec un jeu axial dans un logement transversal (30) ménagé dans le piston primaire, le clapet (20) étant déplaçable entre des positions ouverte et fermée en fonction de la position relative du piston primaire (18) par rapport à l'organe d'appui (26).

10. Maître cylindre selon la revendication 9, **caractérisé en ce que** l'organe d'appui (26) a une forme générale de goupille.

11. Maître cylindre selon la revendication 9 ou 10, **caractérisé en ce que** le clapet (20) est munie d'une queue de commande (38), s'étendant à travers le canal (32) du piston primaire (18), destiné à coopérer avec l'organe d'appui (26) de façon à maintenir le clapet (20) en position ouverte.

12. Maître cylindre selon l'une quelconque des revendications précédentes, **caractérisé en ce qu'**il est du type tandem à clapets.

## Patentansprüche

1. Hauptzylinder für ein Bremssystem, vom Typ mit:
- einem Körper (12), der eine Kammer (14) zum Zuführen von Bremsflüssigkeit und mindestens eine Kammer (16) zur Druckbeaufschlagung der Bremsflüssigkeit begrenzt, welche Primärkammer genannt wird,
- einem Kolben (18), der die Zufuhrkammer (14) und die Primärkammer (16) trennt, der Primärkolben genannt wird und der axial zwischen einer Ruhestellung und einer Stellung zur Druckbeaufschlagung der Primärkammer (16) verlagert werden kann,
- einem Kanal (40) zum Zuführen von Bremsflüssigkeit, der im Körper (12) ausgebildet ist, und
- Mitteln (42) zum Anschließen dieses Zufuhrkanals (40) an die Zufuhrkammer (14), die im Körper (12) angeordnet sind,
**dadurch gekennzeichnet, dass** die Anschlussmittel (42) zwei Öffnungen aufweisen, die axial versetzt sind und bezüglich der Verlagerungsrichtung des Primärkolbens (18) bei einem Bremsvorgang hintere Öffnung (44) und vordere Öffnung (46) genannt werden, wobei die vordere Öffnung zumindest teilweise durch die Verlagerung des Primärkolbens (18) verschlossen werden kann, so dass der Bremsflüssigkeit-Durchlassquerschnitt durch diese vordere Öffnung (46) minimal ist, wenn sich der Primärkolben (18) in der Ruhestellung befindet.

2. Hauptzylinder nach Anspruch 1, **dadurch gekennzeichnet, dass** die Anschlussmittel (42) Mittel (48) für den rückseitigen Anschluss aufweisen, die mit der hinteren Öffnung (44) verbunden sind, sowie Mittel (50) für den vorderseitigen Anschluss, die mit der vorderen Öffnung (46) verbunden sind, wobei der minimale Bremsflüssigkeit-Durchlassquerschnitt der Mittel (48) für den rückseitigen Anschluss kleiner ist als der minimale Bremsflüssigkeit-Durchlassquerschnitt der Mittel (50) für den vorderseitigen Anschluss.

3. Hauptzylinder nach Anspruch 2, **dadurch gekennzeichnet, dass** die Mittel für den rückseitigen Anschluss eine Bohrung (48) aufweisen, die den Zufuhrkanal (40) an die hintere Öffnung (44) anschließt und in der ein durchbohrtes Organ (52) aufgenommen ist, das eine Verengung bildet.

4. Hauptzylinder nach Anspruch 3, **dadurch gekennzeichnet, dass** das durchbohrte Organ (52) in die Bohrung (48) für den rückseitigen Anschluss geschraubt oder mit Kraft darin eingesetzt ist.

5. Hauptzylinder nach einem der Ansprüche 2 bis 4, **dadurch gekennzeichnet, dass** die Mittel für den vorderseitigen Anschluss eine Bohrung (50) aufweisen, die vorzugsweise im Wesentlichen quer zum Zufuhrkanal (40) verläuft und diesen Zufuhrkanal (40) an die vordere Öffnung (46) anschließt.

6. Hauptzylinder nach einem der Ansprüche 1 bis 5, **dadurch gekennzeichnet, dass** der Primärkolben (18) mit einem Kanal (32) zur Verbindung der Kammern (14, 16) versehen ist, der durch ein Ventilelement (20) verschlossen werden kann.

7. Hauptzylinder nach Anspruch 6, **dadurch gekennzeichnet, dass** die Ruhestellung des Primärkolbens (18) durch das Zusammenwirken eines fest mit dem Körper (12) verbundenen Ruheanschlags (24) mit einer Anlagefläche definiert ist, welche am Primärkolben (18) ausgebildet ist.

8. Hauptzylinder nach Anspruch 7, **dadurch gekennzeichnet, dass** der Ruheanschlag (24) durch eine kleine Scheibe (28) begrenzt ist, die den Primärkolben (18) umgibt.

9. Hauptzylinder nach einem der Ansprüche 6 bis 8, **dadurch gekennzeichnet, dass** er ein Anlageorgan (26) aufweist, das mit axialem Spiel in einer in dem Primärkolben ausgebildeten Queraufnahme (30) angebracht ist, wobei das Ventilelement (20) in Abhängigkeit von der Relativposition des Primärkolbens (18) bezüglich des Anlageorgans (26) zwischen einer geöffneten und geschlossenen Stellung verlagert werden kann.

10. Hauptzylinder nach Anspruch 9, **dadurch gekennzeichnet, dass** das Anlageorgan (26) insgesamt eine Zapfenform aufweist.

11. Hauptzylinder nach Anspruch 9 oder 10, **dadurch gekennzeichnet, dass** das Ventilelement (20) mit einem Steuerschaft (38) versehen ist, der sich durch den Kanal (32) des Primärkolbens (18) erstreckt und mit dem Anlageorgan (26) so zusammenwirken soll, dass das Ventilelement (20) in der geöffneten Stellung gehalten wird.

12. Hauptzylinder nach einem der vorhergehenden Ansprüche, **dadurch gekennzeichnet, dass** er zum Typ Tandemhauptzylinder mit Ventilelementen gehört.

## Claims

1. Master cylinder for a braking system, of the type comprising :
- a body (12), defining a brake-fluid supply chamber (14) and at least one brake-fluid pressurizing chamber (16), called the primary chamber ;
- a piston (18), called the primary piston, which separates the supply chamber (14) from the primary chamber (16), and which is axially movable between a rest position and a pressurizing position of the primary chamber (16) ;
- a brake-fluid supply passage (40), provided inside the body (12) ; and
- means (42) for the connection of said supply passage (40) with the supply chamber (14), such means being disposed inside the body (12),
**characterised in that** the connection means (42) comprise two axially-offset openings, namely a rear one (44) and a front one (46) relative to the travel direction of the primary piston (18) in the course of a braking operation, the front opening being at least partially closable owing to the travel of the primary piston (18), in such a way that the cross-sectional area of said front opening (46) for the brake-fluid flow is minimum when the primary piston (18) is in its rest position.

2. Master cylinder according to claim 1, **characterised in that** the connection means (42) comprise rear connection means (48) communicating with the rear opening (44), and front connection means (50) communicating with the front opening (46), the minimum cross-sectional area of the rear connection means (48) for the brake-fluid flow being smaller than the minimum cross-sectional area of the front connection means (50) for the brake-fluid flow.

3. Master cylinder according to claim 2, **characterised in that** the rear connection means comprise a hole (48), which connects the supply passage (40) with the rear opening (44), and in which a throttling-forming holed member (52) is accommodated.

4. Master cylinder according to claim 3, **characterised in that** the holed member (52) is either threaded or press-fitted into the rear connecting hole (48).

5. Master cylinder according to any one of claims 2 to 4, **characterised in that** the front connection means comprise a hole (50), preferably substantially transverse to the supply passage (40) and connecting the supply passage (40) with the front opening (46).

6. Master cylinder according to any one of claims 1 to 5, **characterised in that** the primary piston (18) comprises a passage (32) for the interconnection of the chambers (14, 16), said passage being closable by means of a valve (20).

7. Master cylinder according to claim 6, **characterised in that** the rest position of the primary piston (18) is defined by the cooperation of a rest stop (24), integral with the body (12), with a bearing face, which is provided on the primary piston (18).

8. Master cylinder according to claim 7, **characterised in that** the rest stop (24) is borne by a washer (28) surrounding the primary piston (18).

9. Master cylinder according to any one of claims 6 to 8, **characterised in that** it comprises a bearing member (26), which is fitted, with some axial clearance, in a transverse cavity (30) provided inside the primary piston, the valve (20) being movable between an open position and a closed position, as a function of the relative position of the primary piston (18) as regards the bearing member (26).

10. Master cylinder according to claim 9, **characterised in that** the bearing member (26) exhibits the general shape of a pin.

11. Master cylinder according to claim 9 or 10, **characterised in that** the valve (20) is fitted with a control stem (38), extending through the passage (32) provided in the primary piston (18), and intended for a cooperation with the bearing member (26) so as to keep the valve (20) in the open position.

12. Master cylinder according to any one of the preceding claims, **characterised in that** it is of the valved tandem type.
